# EUROPEAN PATENT APPLICATION

(11) **EP 3 608 241 A1**
(43) Date of publication of application: **12.02.2020**
(21) Application number: 18781017.1
(22) Date of filing: 02.04.2018
(51) Int. Cl.: B65D 1/02, A23L 5/00, A23L 27/50, B65D 1/32, B65D 47/20, B65D 77/06

(54) **FOOD AND BEVERAGE COMPOSITION PACKED IN DUAL CONTAINER**

(30) Priority: 05.04.2017 JP 2017075275
(71) Applicant: Kikkoman Corporation, Noda-shi, Chiba 278-8601 (JP)
(72) Inventor: KATAYAMA, Hiroshi, Noda-shi Chiba 278-8601 (JP); KUNITAKE, Yuri, Noda-shi Chiba 278-8601 (JP); MANNEN, Natsuyuki, Noda-shi Chiba 278-8601 (JP); KUWAGAKI, Denmi, Noda-shi Chiba 278-8601 (JP)
(74) Representative: Zacco Sweden AB
(86) International application number: PCT/JP2018/014072
(87) International publication number: WO 2018/186333

(57) **Abstract**

The present invention provides a food and beverage composition contained in a container having at least a double-layered structure and including an innermost layer made of a polyethylene terephthalate resin.

## Description

### Technical Field

The present invention generally relates to a food and beverage composition contained in a novel container, and particularly relates to a liquid seasoning.

### Background Art

Conventionally, as a container for a liquid seasoning such as soy sauce, a dispensing container as disclosed in Patent Document 1 below has been known, for example. This dispensing container includes: a container body including an inner container that holds contents, and deflates as the contents decrease, and an outer container encompassing the inner container and having an intake hole through which external air is taken into a space between the inner and outer containers; a discharge cap mounted on a mouth portion of the container body and having a discharge port through which the contents are discharged; and an external air introduction hole that provides communication between the outside and the intake hole. The discharge cap includes a body tubular member having a topped tubular shape, a pour-out tube communicated with the inside of the body tubular member, and a check valve that switches to provide and cut off communication between the inside of the body tubular member and the inside of the pour-out tube.

### Related Art References

### Patent Document

Patent Document 1: Japanese Patent Laid-open No. 2004-231280

### Summary of Invention

### Technical Problem

The applicant found through studies of the conventional dispensing container that the concentration of a particular aroma component contained in contents (for example, a soy sauce containing seasoning) in the container changes over time.

It is an object of the present invention to provide a food and beverage composition, a liquid seasoning in particular, contained in a container capable of maintaining an aroma retaining property for a long period of time with fewer changes in aroma components after opened.

### Solution to Problem

To achieve such an object, the inventors of the present application studied changes in aroma components over time, focusing on the material of a dispensing container, and found that a container made of a polyethylene terephthalate resin and having a double-layered structure has excellent capability of holding particular aroma components (aroma retaining property) as compared to a container made of an ethylene-vinyl alcohol copolymer resin film, which led to completion of the present invention.

The present application includes the following invention.
[1] A food and beverage composition contained in a container having at least a double-layered structure and including an innermost layer made of a polyethylene terephthalate resin.
[2] The food and beverage composition according to [1], in which the container is a dispensing container including:
   a double-layered container body including
   an inner container that contains the food and beverage composition and deflates as the amount of the food and beverage composition decreases, and
   an outer container encompassing the inner container and having an intake hole through which external air is taken into a space between the inner container and the outer container; and
   a discharge cap mounted on a mouth portion of the container body and having a discharge port through which the food and beverage composition is discharged.
[3] The food and beverage composition according to [1] or [2], in which at least one of the containers contains an oxygen absorber.
[4] The food and beverage composition according to [3], in which the concentration of ethyl esters having 6 to 20 carbon atoms and/or terpenes having 10 carbon atoms contained in the food and beverage composition stored at room temperature for 30 days after manufacturing is 80% or higher of the concentration on day 0 after manufacturing.
[5] The food and beverage composition according to any one of [1] to [4], which is a liquid seasoning.
[6] The food and beverage composition according to [5], in which the liquid seasoning is soy sauce or a soy sauce product.
[7] A method for suppressing a decrease in aroma components contained in a food and beverage composition over time, the method including a step of filling, with the food and beverage composition, a container made of a polyethylene terephthalate resin and having at least a double-layered structure.
[8] The method according to [7], in which the aroma components are ethyl esters having 6 to 20 carbon atoms and/or terpenes having 10 carbon atoms.

### Advantageous Effects of Invention

According to the present invention, a container has at least a double-layered structure and includes an innermost layer made of a polyethylene terephthalate resin, and thus it is possible to provide a food and beverage composition with fewer changes in the concentration of a particular aroma component such as ethyl esters or terpenes and in the color tone over time so that the quality of a product containing the food and beverage composition is maintained for a long period of time. In addition, depending on the aroma component, the concentration after storage increases rather than is maintained, and thus it is possible to enhance desired flavor over time.

### Brief Description of Drawings

[Figure 1] Figure 1 is a longitudinal sectional view of illustrating, in an enlarged manner, part of a dispensing container in which a circulation allowable groove is formed at part of a valve element.
[Figure 2] Figure 2 is a diagram illustrating the circulation allowable groove in Figure 1 and a peripheral part thereof in a further enlarged manner.
[Figure 3] Figure 3 is a longitudinal sectional view illustrating, in an enlarged manner, part of a dispensing container in which a circulation allowable groove is formed at part of a valve element in a form different from that in Figure 1.
[Figure 4] Figure 4 is a diagram illustrating the circulation allowable groove in Figure 3 and a peripheral part thereof in a further enlarged manner.
[Figure 5] Figure 5 is a longitudinal sectional view for description of effects of the dispensing container illustrated in Figure 1.
[Figure 6] Figure 6 is a longitudinal sectional view for description of the effects of the dispensing container illustrated in Figure 1.
[Figure 7] Figure 7 is a perspective view illustrating an exemplary sectional structure such as a coupling member included in the dispensing container.
[Figure 8] Figure 8 is an overall view illustrating an exemplary dispensing container.

### Description of Embodiments

### Food and beverage composition

For a food and beverage composition contained in a container having at least a double-layered structure according to the present invention, the container includes an innermost layer made of a polyethylene terephthalate resin. The number of layers of the container may be 3 or more as long as the effects of the present invention are achieved. A container (also referred to as an inner container, more specifically, an innermost layer) that is disposed innermost and contacts the food and beverage composition is substantially made of a polyethylene terephthalate resin but may optionally contain an oxygen absorber to provide the container with a gas barrier property and an oxygen absorption property.

Any outer container (outer container) other than the inner container is not limited to a particular material, but may be partially or entirely made of a polyethylene terephthalate resin or another resin such as an ethylene-vinyl alcohol copolymer resin film. However, to reuse (recycle) the container, it is preferable that the entire container is mainly made of a polyethylene terephthalate resin.

The container mainly made of a polyethylene terephthalate resin is better in aesthetics than a conventional dispensing container (made of, for example, low-density polyethylene), and can directly and clearly show the color of contents.

In a further preferable aspect, the polyethylene terephthalate resin has an oxygen absorber to further improve the storage stability of the contents. The oxygen absorber is not particularly limited but only needs to be disposed inside or on the surface the polyethylene terephthalate resin, and may be, for example, an oxygen absorber (also referred to as a polyamide/transition metal catalyst oxygen absorber) containing a polyamide material and a deoxygenation material as disclosed in Japanese Patent No. 5161462 (International Publication No. WO 2005/083003). Any other well-known oxygen absorber such as an inorganic oxygen absorber (for example, reduced iron or sodium sulfite) or an organic oxygen absorber (for example, ascorbic acids, ethylenic unsaturated hydrocarbon/transition metal catalyst, or cyclohexene side chain containing polymer/transition metal catalyst) may be used. The oxygen absorber is preferably impregnated in the resin. The kind and amount to be mixed of the oxygen absorber may be appropriately selected by the skilled person in the art in accordance with a desired effect of a barrier function or the like. For example, the polyamide/transition metal catalyst oxygen absorber may be mixed in the polyethylene terephthalate resin at 0.1 to 20% by weight, preferably 1 to 10% by weight, more preferably 1 to 3% by weight.

The polyamide material may be an aromatic polyamide or an aliphatic polyamide. The polyamide material may be a homopolymer material or a copolymer amide material. The aromatic polyamide may be a homopolymer or copolymer.

A preferable kind of the polyamide material is MX nylon. The MX nylon is a polymer containing at least 70 mol % of a structural unit obtained from a xylylene diamine mixture containing m-xylylene diamine alone or m-xylylene diamine and p-xylylene diamine in an amount smaller than 30% of the entire material and containing an α,ω-aliphatic dicarboxylic acid having 6 to 10 carbon atoms.

Examples of the MX polymer include homopolymers such as poly-m-xylylene adipamide and poly-m-xylylene sebacamide, copolymers such as an m-xylylene/p-xylylene adipamide copolymer, an m-xylylene/p-xylylene piperamide copolymer and an m-xylylene/p-xylylene azelamide copolymer, and a copolymer of the above homopolymer or copolymer component with an aliphatic diamine such as hexamethylenediamine, a cyclic diamine such as piperazine, an aromatic diamine such as p-bis(2-aminoethyl)benzene, an aromatic dicarboxylic acid such as terephthalic acid, an ω-amino carboxylic acid such as ε-caprolactam, ω-aminoheptane acid, or an aromatic aminocarboxylic acid such as p-aminobenzoic acid. The MX polymer may be optionally used in combination with a polymer such as nylon 6, nylon 66, nylon 610, or nylon 11.

A particularly preferable aromatic polyamide is, for example, a polymer formed by polymerization of metaxylylenediamine (H₂NCH₂-m-C₆H₄-CH₂NH₂) and adipic acid (HO₂C(CH₂)₄CO₂H), and is a product manufactured and sold in the name of MXD6 by Mitsubishi Gas Chemical Company, Inc. Various kinds of grades of MXD6, such as Grades 6001, 6007, and 6021 may be used. A preferable aliphatic polyamide material is nylon 66. Other appropriate polyamides include GRIVORY (registered trademark) (for example, GRIVORY (registered trademark) G16 and G21, which are copolyamides containing a linear aliphatic unit and a cyclic aromatic component and can be obtained from EMS-Chemie Inc.), and VERSAMID (registered trademark) (aliphatic polyamide typically used as ink resin, which can be obtained from Cognis Corporation).

A preblend contains a deoxygenation material in addition to diluent polyester and polyamide material. The preblend is present at about 20 ppm to about 2000 ppm, preferably about 50 ppm to about 1500 ppm, with respect to the weight of the deoxygenation material. In a more preferable embodiment, the preblend preferably contains the deoxygenation material at about 100 ppm to about 1000 ppm with respect to the weight of the preblend material.

The deoxygenation material may be, for example, a metal selected from the first, second and third transition columns of the periodic table, a complex, or a salt.

The metals usable as the deoxygenation material include iron, cobalt, copper, manganese, zinc, nickel, ruthenium, rhodium, palladium, osmium, iridium, and platinum. Examples of the deoxygenation material also include aluminum powder, aluminum carbide, aluminum chloride, cobalt powder, cobalt oxide, cobalt chloride, antimony powder, antimony oxide, antimony triacetate, antimony chloride III, antimony chloride V, iron, electrolytic iron, iron oxide, platinum, platinum on alumina, palladium, palladium on alumina, ruthenium, rhodium, copper, copper oxide, nickel, and nanoparticles of a mixed metal (that is, cobalt iron oxide nanoparticles).

Among the above metals, a cobalt, iron, nickel, copper, or manganese compound is a preferable deoxygenation material. In particular, the cobalt compound as a most preferable deoxygenation material typically exists as a metal salt or complex. Anions of the salt may be inorganic or organic. Examples of the anions include halide, in particular, chloride, acetate, stearate, and octoate. Other deoxygenation materials include cobalt bromide (II) and cobalt carboxylate. The cobalt carboxylate can be obtained as cobalt SICCATOL (R). The cobalt carboxylate is a solution of cobalt carboxylate of C8 to C10, and the concentration of cobalt (as a metal) is about 10% by weight of the solution. Benzophenone or the like may be additionally blended as an ultraviolet sensitizer for use.

The disposition and amount of the deoxygenation material in the innermost layer of the container may be determined as appropriate by the skilled person in the art.

The food and beverage composition as contents contained in the container may be any food and beverage product containing, as an aroma component, at least one of low-molecule ethyl esters, preferably ethyl esters and/or terpenes having 6 to 20 carbon atoms, preferably terpenes having 10 carbon atoms, i.e., a monoterpene, at manufacturing. Among others, however, a food and beverage product with ethyl esters and terpenes which are aroma components unique to the end product and are desired to be maintained or enhanced, is preferred. Examples of such food and beverage products include a liquid seasoning, preferably soy sauce or a soy-sauce-like seasoning containing soy sauce, such as kelp soy sauce, and other seasonings such as Ponzu vinegar, stock sauce, sauce, and dressing, olive oil, and drinks such as a vegetable drink and a soft drink. The food and beverage product is not limited to liquid but may be semi-liquid, semi-solid, or solid as long as the effects of the present invention are achieved. The food and beverage composition includes products (soy sauce products such as kelp soy sauce, bonito stock soy sauce, and raw-egg-rice soy sauce) manufactured by using soy sauce and a soy-sauce-like seasoning.

Examples of the ethyl esters contained in the food and beverage composition include ethyl esters having 6 to 20 carbon atoms, such as 2-methylethyl propanoate, ethyl butyrate, 2-methylethyl butyrate, 3-methylethyl butyrate, ethyl tetradecanoate, ethyl hexadecanoate, ethyl octadecanoate, ethyl oleate, ethyl linoleate, ethyl 6,9,12-hexadecatrienoate, ethyl 9,12,15-hexadecatrienoate, and ethyl 6,9,12,15-octadecatetraenoate, but are not limited thereto.

Examples of terpenes contained in the food and beverage composition include sabinene, pinene, limonene, terpinene, cymene, and linalool.

When the food and beverage composition is stored in a container having at least a double-layered structure at room temperature for 30 days from manufacturing, the concentration of a particular aroma component contained in the food and beverage composition is maintained at 80%, preferably 90% or higher of the concentration on day 0 after manufacturing, more specifically, the concentration measured right before or right after filling of the container, or increases to 100% or higher, preferably 110% or higher, more preferably 120% or higher of the day 0 concentration.

"Soy sauce" described in the present specification is a concept identical to soy sauce according to Japan Agricultural Standards. For example, authentically brewed soy sauce is soy sauce according to an authentically brewed scheme in Japan Agricultural Standards for soy sauce. Specifically, the soy sauce according to the authentically brewed scheme is a clear liquid seasoning obtained by processing soybean or grain such as soybean, wheat, and rice by steaming or another method and fermenting and maturing, with added salt water or mash-squeezed liquid, soy sauce malt obtained by inoculating and culturing Aspergillus oryzae, or the soy sauce malt to which steamed or puffed rice, or glycosylated rice with Aspergillus oryzae is added. The soy sauce according to the authentically brewed scheme may be fired (sterilized by heating) to obtain authentically brewed fired soy sauce.

The authentically brewed pure soy sauce is classified as a mash-squeezed liquid in Japan Agricultural Standards, and is soy sauce obtained by squishing maturing mash of soy sauce and manufactured in the authentically brewed scheme without firing. Pure soy sauce refers to soy sauce from which, for clarification after the squishing, sediments and solid matters are separated and removed by being placed still or remaining sediments and microorganisms are removed through diatomite filtration or MF film processing.

A "soy-sauce-like seasoning" in the present specification means seasonings manufactured from the authentically brewed soy sauce (fired soy sauce or pure soy sauce) subjected to the above process among liquid seasonings used for purposes the same as those of "soy sauce" defined in Japan Agricultural Standards. The soy-sauce-like seasoning may include soy sauce.

The soy-sauce-like seasoning may contain other flavor and taste components. Examples of the flavor and taste components include yeast extract, seafood extract, fed animal extract, an amino acid, a nucleic acid, an organic acid, and protein hydrolysate. Among these, glutamate as the amino acid, nucleic acid, and yeast extract are preferable, in particular, to add flavor to the soy-sauce-like seasoning or soy sauce. These flavor and taste components may be added alone or in combination.

The soy-sauce-like seasoning can be used for, without limitation in particular: various food and beverage products to which the soy-sauce-like seasoning needs to be added, such as various foods and drinks, meats, seafoods, vegetables, algae, fungi, fruits, nuts; processed foods cooked by using them, such as cooked products, rice foods, noodles, breads, vegetables, pickled vegetables, tempura, boiled eggs, snacks, stirfries, meat products, soups (cup soups and soups of instant noodles), and roux; fish/fed animal processed products such as boiled fish paste, fish sausage, fried fish paste; various soy sauces such as a koikuchi soy sauce and various low-salt soy sauces; various stock sauces, various sauces; yeast extract; fed animal extract; seafood extract; a seasoning such as protein hydrolysate; and a seasoning containing nucleic acid (such as inosinic acid sodium or guanylic acid sodium).

A vegetable drink contains vegetable juice or/and fruit juice and may contain food additives as necessary. The vegetable juice or the fruit juice is acquired as a liquid through processes of, for example, heating a vegetable or a fruit as necessary, removing its non-edible part, shredding and grinding the vegetable or the fruit, and squishing, centrifugation, and the like. Any other processes such as filtration and enzyme treatment may be performed. The vegetable juice and the fruit juice may be not from concentrate or from concentrate. Examples of vegetables and fruits as the materials of the vegetable juice and the fruit juice include tomato, carrot (Panax quinquefolius), apple, orange, tangerine, grapefruit, lemon, other citrus fruits, grape, pear, plum, peach, strawberry, melon, watermelon, pineapple, banana, mango, papaya, passion fruit, mangosteen, dragon fruit, durian, noni, edible cactus, aloe, celery, parsley, pumpkin, squash, cucumber, bean sprout, various sprouts, burdock, pepper, chili pepper, aubergine, sweet potato, potato, taro plant, yacon, radish, turnip, kale, cabbage, broccoli, cauliflower, rape plant, mustard spinach, Chinese cabbage, pak-choi, tatsoi, Japanese mustard green, radish, watercress, salad rocket, other cruciferous leaf and root vegetable flower buds, lettuce, artemisia, chop-suey greens, other composite leaf vegetables, spinach, beet, other chenopodiaceous leaf and root vegetables, onion, green onion, garlic, chive, Chinese leek, other liliaceae leaf and root vegetables, soybean, azuki bean, mung bean, chickpea, lentil, broad bean, other leguminous pulses, rice, wheat, millet, other leguminous grains, and the like. These may be used alone or in combinations of two or more, but are not particularly limited.

The food and beverage composition contained in a container having at least a double-layered structure according to the present invention is unlikely to suffer degradation over time as compared to conventional ones. This is illustrated with an example wherein the composition is soy sauce. Depending on storage conditions, not only the concentration of aroma components but also the color tone change over time, and the soy sauce may have a color number of a different kind from that at manufacturing. For example, when soy sauce having a color number of 18 is stored in a single layered bottle made of a polyethylene terephthalate resin at room temperature for 30 days, the color number potentially decreases to 6 approximately. However, with a double-layered bottle made of a polyethylene terephthalate resin, the color number can be maintained at 16 approximately. The color number of soy sauce means the color number of soy sauce standard color (a smaller color number indicates a darker color, and a larger color number indicates a lighter color) defined by JAS standards, and has a value of 2 to 56.

The following describes a dispensing container according to an embodiment of the present invention with reference to the accompanying drawings.

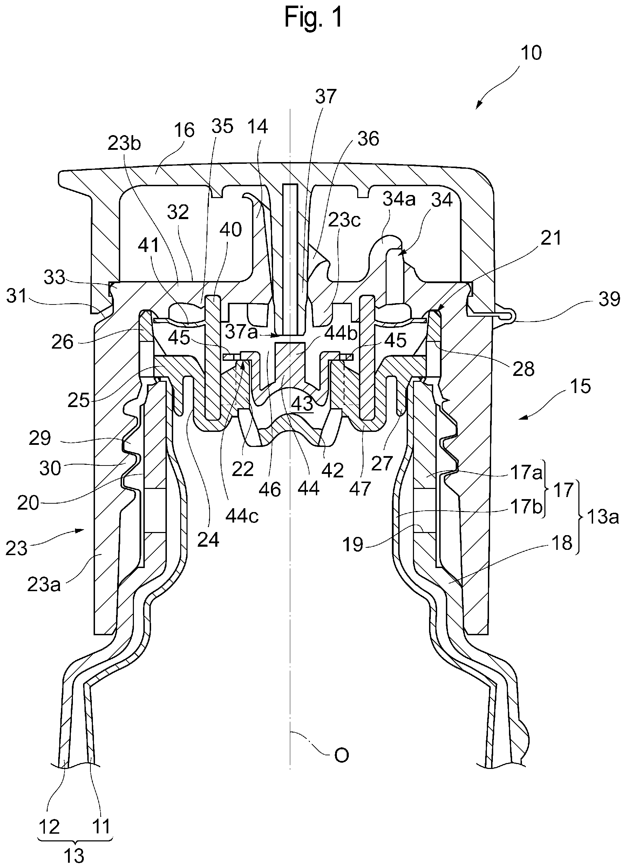

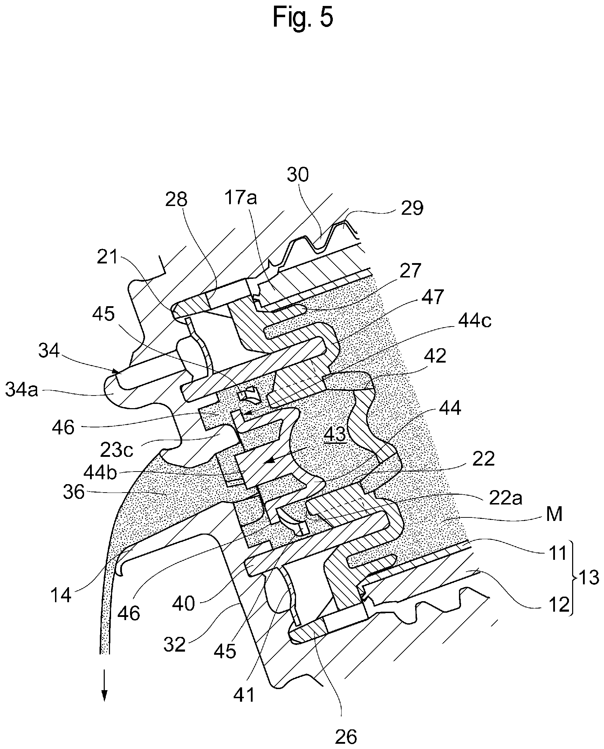

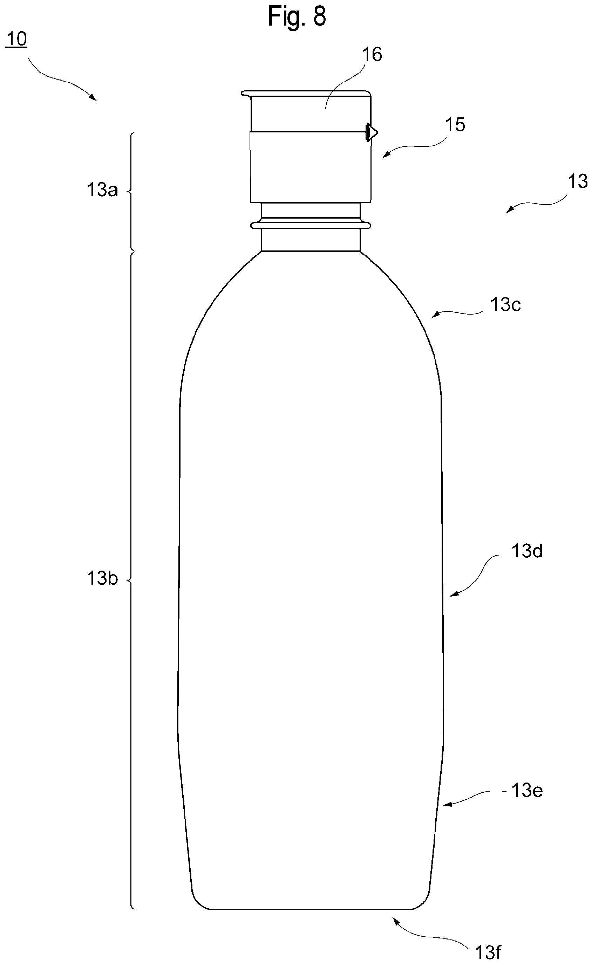

A dispensing container 10 includes: a container body 13 including an inner container 11 that holds a content M (refer to Figure 5) and deflates as the amount of the content M decreases and an outer container 12 that is elastically deformable and encompasses the inner container 11; a discharge cap 15 that is mounted on a mouth portion 13a of the container body 13 and has a discharge port 14 through which the content M is discharged; and an upper cap 16 that is detachably disposed on the discharge cap 15 (refer to Figures 1 and 8, for example).

The container body 13 of the dispensing container 10 includes the mouth portion 13a and a body portion 13b. The body portion 13b includes a shoulder part 13c, a waist part 13d, a lower body part 13e, and a bottom part 13f (refer to Figure 8, for example).

The container body 13 is formed in a bottomed tubular shape, and the upper cap 16 is formed in a topped tubular shape. The central axes of the container body 13 and the upper cap 16 are aligned with a common axis when the container body 13 is lidded with the upper cap 16. Hereinafter, this common axis is referred to as a container axis O, a side closer to the upper cap 16 in the direction of the container axis O is referred to as an upper side, a side closer to the bottom part 13f of the container body 13 is referred to as a lower side, a direction orthogonal to the container axis O is referred to as a radial direction, and a direction orbiting about the container axis O is referred to as a circumferential direction.

The container body 13 is what is called a delamination bottle in which the inner container 11 is laminated on the inner surface of the outer container 12 in a delaminatable manner. In the present embodiment, the inner container 11 and the outer container 12 are both made of a polyethylene terephthalate resin. With this configuration, the dispensing container 10 according to the present embodiment can be reused (recycled) after use unlike a conventional dispensing container made of PP or the like, which needs to be discarded, and has such aesthetics that the color of the content M can be directly and clearly shown. When the discharge cap 15 is not made of a polyethylene terephthalate resin, the container body 13 from which the discharge cap 15 is removed as needed at a stage of a recovery process is reused.

The dispensing container 10 according to the present embodiment, in which the inner container 11 and the outer container 12 are both made of a polyethylene terephthalate resin, is excellent in the capability of holding the aroma of the contents, in other words, has an excellent aroma retaining property as compared to the conventional dispensing container made of PP or the like as described in the following embodiment.

The inner container 11 needs to have a small thickness to efficiently discharge the contents when the inner container 11 and the outer container 12 are made of a polyethylene terephthalate resin. In the present embodiment, the thickness of the inner container 11 is equal to or smaller than 2/3 to 1/6, preferably 1/2 to 1/4 approximately, of the thickness of a normal PET container (the thickness of the PET bottle (container) differs depending on the purpose of use or a site and is, for example, 0.2 to 0.3 mm approximately in a case of a 1L soy sauce PET bottle). Exemplary numerical values thereof are 0.03 to 0.2 mm, preferably 0.04 to 0.15 mm, and more preferably 0.05 to 0.10 mm. With this configuration, the inner container 11 is laminated on the inner surface of the outer container 12 in a delaminatable manner, and is flexible so that the container can be filled with contents and deflate as the amount of the contents decrease. Accordingly, in the present embodiment, a reusable PET dispensing container (PET delamination container) is achieved.

When, as described above, the thickness of the inner container 11 is 2/3 to 1/6, preferably 1/2 to about 1/4 or less, of the thickness of a normal PET container, or is 0.03 to 0.2 mm, preferably 0.04 to 0.15 mm, and more preferably 0.05 to 0.10 mm in numerical values so that the flexibility can be achieved, the inner container 11 has oxygen permeability, and the function (oxygen barrier function) of preventing oxygen permeation potentially becomes insufficient. To avoid this, the inner container 11 is made of a polyethylene terephthalate resin containing an oxygen absorber in the present embodiment. The outer container 12 may be made of a polyethylene terephthalate resin containing an oxygen absorber. In this case, the outer container 12 may be made of a polyethylene terephthalate resin containing an oxygen absorber in place of the inner container 11, or the inner container 11 and the outer container 12 may be both made of a polyethylene terephthalate resin containing an oxygen absorber. In the latter case, the barrier function can be achieved more strongly.

The mouth portion 13a of the container body 13 has a double tubular shape including an upper tubular part 17 positioned on the upper side and a lower tubular part 18 positioned on the lower side and having a diameter larger than that of the upper tubular part 17.

A male screw part 29 is formed on the outer peripheral surface of a part (hereinafter referred to as an outer upper cylindrical part) 17a of the upper tubular part 17, which is made of the outer container 12. In addition, an intake hole 19 through which external air is taken into the space between the inner container 11 and the outer container 12 is formed at a part of the outer upper cylindrical part 17a, which is positioned on the lower side of the male screw part 29. A communication groove 20 extending in the direction of the container axis O is formed at a part of the male screw part 29, which is positioned on the upper side of the intake hole 19.

The inner peripheral surface of the outer upper cylindrical part 17a is a cylindrical surface, and a part (hereinafter referred to as an inner upper tubular part) 17b of the upper tubular part 17, which is made of the inner container 11 is laminated on the inner peripheral surface. An upper end part of the inner upper tubular part 17b is folded toward the outer side in the radial direction and disposed on an opening end of the outer upper cylindrical part 17a.

The discharge cap 15 includes an inside plug member 21 closing the mouth portion 13a of the container body 13, and a body tubular member 23 having a topped tubular shape, covering the inside plug member 21, and including the discharge port 14.

The inside plug member 21 includes a plug body 47, an outer peripheral part of which is disposed on an opening end of the mouth portion 13a of the container body 13, and a communication tubular part 22 erected on the plug body 47.

The plug body 47 includes an inner tubular part 24 having a bottomed tubular shape and disposed in the mouth portion 13a of the container body 13 at an interval from the mouth portion 13a, a flange part 25 provided as an extension from the upper end of the inner tubular part 24 toward the outer side in the radial direction and disposed on the opening end of the mouth portion 13a of the container body 13, an outer tubular part 26 extending upward from the outer periphery of the flange part 25, and a middle tubular part 27 extending downward from the flange part 25, surrounding the inner tubular part 24 from the outer side in the radial direction, and fitted in the mouth portion 13a of the container body 13 in a liquid-tight manner.

The inner tubular part 24, the flange part 25, the outer tubular part 26, and the middle tubular part 27 are disposed coaxially with the container axis O. An external air communication hole 28 penetrating in the radial direction and opened downward is formed at a lower end part of the outer tubular part 26.

The communication tubular part 22 is disposed at a bottom wall part of the inner tubular part 24. In addition, a through-hole 42 opened to both the inside of the inner container 11 and of the communication tubular part 22 is provided through the bottom wall part. The through-hole 42 is disposed coaxially with the container axis O and has a diameter smaller than the inner diameter of the communication tubular part 22, and the size of the through-hole 42 in the direction of the container axis O is smaller than the size of the communication tubular part 22 in the direction of the container axis O.

The body tubular member 23 has a topped tubular shape disposed coaxially with the container axis O.

A female screw part 30 screwed with the male screw part 29 of the mouth portion 13a of the container body 13 is formed on the inner peripheral surface of a peripheral wall part 23a of the body tubular member 23. The lower tubular part 18 of the mouth portion 13a of the container body 13 is fitted in an air-tight manner in a lower end part of the peripheral wall part 23a, which is positioned on the lower side of a screw part where the female screw part 30 is formed, and the outer tubular part 26 of the inside plug member 21 is fitted in an upper end part of the peripheral wall part 23a, which is positioned on the upper side of the screw part.

A top wall part 23b of the body tubular member 23 includes an annular lower plate part 31 extending toward the inner side in the radial direction from the upper end of the peripheral wall part 23a, an upper plate part 32 having a diameter smaller than the inner diameter of the lower plate part 31 and disposed on the upper side of the lower plate part 31, and a coupling annular part 33 coupling the inner periphery of the lower plate part 31 and the outer periphery of the upper plate part 32. The lower plate part 31, the upper plate part 32, and the coupling annular part 33 are disposed coaxially with the container axis O.

The upper plate part 32 includes an external air introduction protrusion 34a having an external air introduction hole 34 that provides communication between the inside of the body tubular member 23 and the outside. The upper plate part 32 also includes a reception tubular part 35 extending downward and having an inner diameter equivalent to the inner diameter of the inner tubular part 24 of the inside plug member 21.

In addition, a discharge tube 36, the inside of which serves as the discharge port 14 is provided through the upper plate part 32.

An inner seal tubular part (seal part) 37 extending downward from the upper cap 16 is fitted in the discharge port 14. The discharge port 14 has an axis line direction aligned with the direction of the container axis O.

An externally fitting tubular part 40 as a tubular member externally fitted to the communication tubular part 22 of the inside plug member 21 is disposed between the inside plug member 21 and the body tubular member 23. The externally fitting tubular part 40 is disposed coaxially with the container axis O, and has a lower end part externally fitted to the communication tubular part 22 and fitted in the inner tubular part 24 of the inside plug member 21, and an upper end part fitted in the reception tubular part 35 of the body tubular member 23.

An annular air valve part 41 provided as an extension toward the outer side in the radial direction is formed at a middle part of the externally fitting tubular part 40 in the direction of the container axis O. The air valve part 41 is disposed to cover the space between the reception tubular part 35 and the coupling annular part 33 from below. The air valve part 41 is elastically deformable and switches to provide and cut off communication between the intake hole 19 and the external air introduction hole 34.

The inside plug member 21 includes a communication hole 43 that provides communication between the discharge port 14 and the inside of the inner container 11. The communication hole 43 is made of the inside of the communication tubular part 22 and disposed coaxially with the container axis O. Accordingly, the communication hole 43 has an axis line direction aligned with the direction of the container axis O. In the illustrated example, the communication hole 43 is positioned on the lower side of the discharge port 14, in other words, on the inner side of the inner container 11 in the direction of the container axis O. The inner volume of the communication hole 43 is larger than the inner volume of the discharge port 14.

In the present embodiment, a valve element 44 that is slidably fitted in the direction of the container axis O and elastically displaces in the direction of the container axis O to open and close the communication hole 43 is disposed in the communication hole 43.

The valve element 44 has a bottomed cylindrical shape disposed coaxially with the container axis O, and includes a periphery upper end part as an annular flange part 44a protruding toward the outer side in the radial direction. The valve element 44 (flange part 44a) contacts on an opening surface at the upper end of the communication tubular part 22 to cut off communication between the through-hole 42 and the communication hole 43.

A protrusion part 44b that contacts a lower end part 37a of the inner seal tubular part 37 is formed at a central part of the valve element 44 (refer to Figure 1).

The periphery upper end of the valve element 44 is positioned on the upper side of the upper end of the communication tubular part 22, and coupled with one end of an elastic coupling piece 45 that couples the valve element 44 and the externally fitting tubular part 40. A plurality, three in the illustrated example, of elastic coupling pieces 45 are provided at intervals in the circumferential direction, and each elastic coupling piece 45 extends in a curved shape in the circumferential direction. The positions of both end parts of each elastic coupling piece 45 in the direction of the container axis O are equivalent to each other.

The valve element 44, the externally fitting tubular part 40, the elastic coupling pieces 45, and the air valve part 41 are integrally shaped.

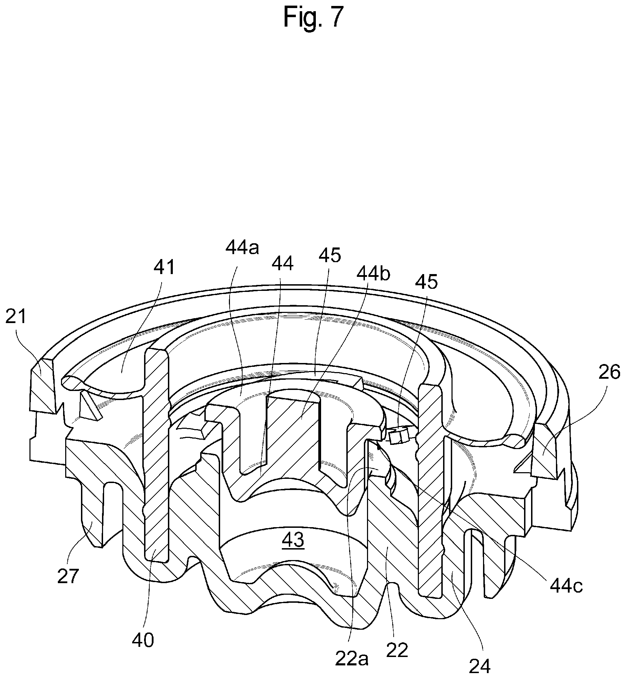

The elastic coupling pieces 45 elastically deform to allow the valve element 44 to be displaced in the direction of the container axis O (in the present specification, the displacement of the valve element 44 as the elastic coupling pieces 45 elastically deform in this manner is referred to as elastic displacement). When a plurality (in the illustrated example, three) of elastic coupling pieces 45 are provided as in the present embodiment, the elastic coupling pieces 45 are preferably disposed at intervals equal to each other in the circumferential direction. When the elastic coupling pieces 45 are disposed at the equal intervals in this manner, it is possible to assist smooth displacement of the valve element 44 while preventing a state (tilted state) in which the valve element 44 is tilted relative to a surface orthogonal to the container axis O at the elastic displacement (refer to Figure 7).

When the valve element 44 is elastically displaced, each elastic coupling piece 45 elastically deforms with twist partially added and becomes tilted as a whole (refer to Figure 7). In this case, the elastic coupling piece 45 itself becomes partially twisted and entirely elongated in accordance with the state, and elastic restoring force of the elastic coupling piece 45 acts as force restoring and displacing (returning) the valve element 44 to a position before the displacement. At the elastic displacement or the restoring displacement, the valve element 44 may rotate in the circumferential direction (clockwise or anticlockwise) about the container axis O.

Each elastic coupling piece 45 according to the present embodiment extends in a curved shape in the circumferential direction as described above, and is simply housed in the narrow gap between the valve element 44 and the externally fitting tubular part 40 (in the present embodiment, between the flange part 44a of the valve element 44 and the inner peripheral surface of the externally fitting tubular part 40) in the initial state of the valve element 44 or a state in which the valve element 44 is restored and displaced toward the inner side of the inner container 11 in the direction of the container axis O.

The dispensing container 10 including the upper cap 16 as in the present embodiment preferably has a structure for avoiding overflow of the content M when the dispensing container 10 is lidded with the upper cap 16. Such a structure will be described below with a specific example.

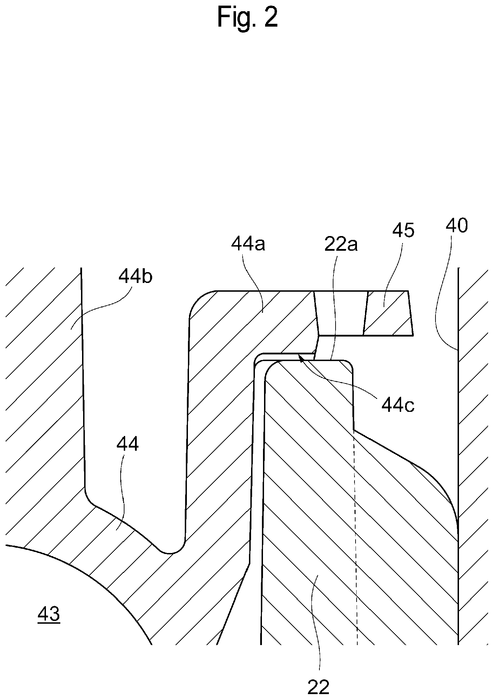

In the dispensing container 10 illustrated in Figure 1, the annular upper end surface of the communication tubular part 22 contacts the annular flange part 44a provided to a periphery upper end part of the valve element 44, and functions as a valve seat (valve holder) 22a that receives the valve element 44. In this case, the bottom surface of the valve element 44 may or may not contact a part of the plug body 47, which is positioned on the inner side of the communication tubular part 22 in the radial direction. A circulation allowable groove 44c that allows circulation of the content M is formed at part of a site of the valve element 44, which contacts the valve seat 22a (refer to Figure 2). The circulation allowable groove 44c is preferably set to have a size with which the content M remaining in an inner space 46 is returned into the inner container 11 after the valve element 44 sits on the valve seat 22a, and the content M closes the circulation allowable groove 44c (prevents air circulation) by surface tension at the final stage. At least part of the contents remaining in the inner space 46 may be returned to the inner container through the circulation allowable groove 44c.

The specific shape of the circulation allowable groove 44c and the number thereof are not particularly limited.

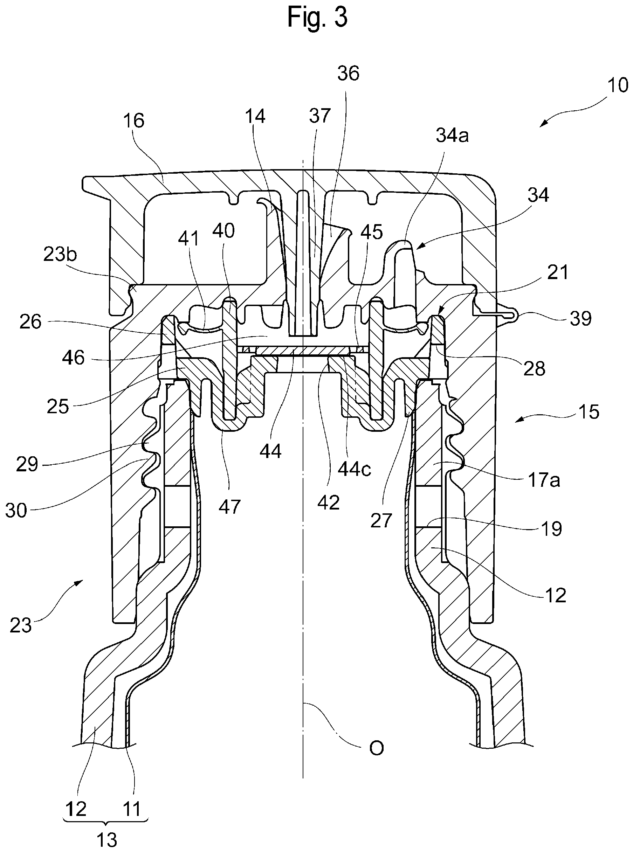

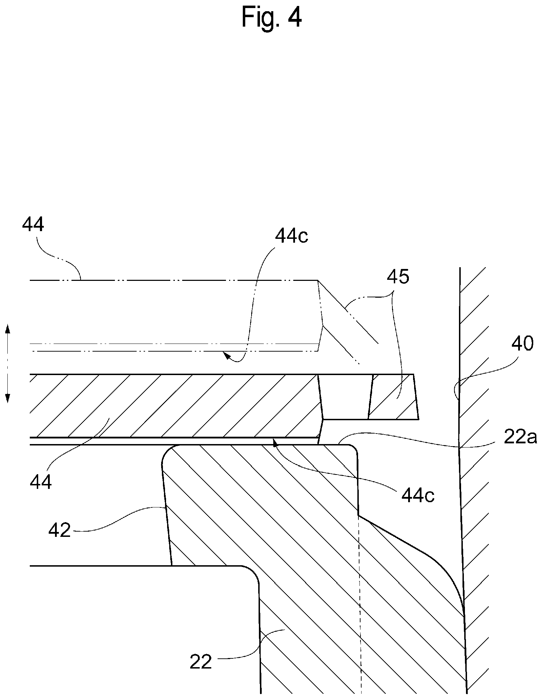

The following describes another example of the circulation allowable groove 44c. In the dispensing container 10 illustrated in Figures 3 and 4, the valve element 44 having a flat plate shape and a substantially circular shape in a plan view is employed. The circulation allowable groove 44c that allows circulation of the content M is formed at part of the site of the valve element 44, which contacts the valve seat 22a (refer to Figures 3 and 4). The circulation allowable groove 44c is preferably set to have a size with which the content M remaining in the inner space 46 is returned into the inner container 11 after the valve element 44 sits on the valve seat 22a, and the content M closes the circulation allowable groove 44c (prevents air circulation) by surface tension at the final stage. The circulation allowable groove 44c may be provided, for example, in a length equal to the diameter on a straight line between outer edges in the radial direction on the back surface of the valve element 44, or in a length from an outer edge to an optional position at a central part of the back surface.

Typically, when the content M remains at the discharge port, the remaining content M potentially dirties the surrounding by leakage and scattering upon impact application or the like at use again or at storage. In addition, when the upper cap 16 is closed to lid the dispensing container, the content M remaining in the inner space 46 is pushed out the content M by the inner seal tubular part 37 that enters the discharge port 14 for fitting. However, in the dispensing container illustrated in, for example, Figure 1, the content M accumulating near the discharge port 14 or in the inner space 46 can circulate through the circulation allowable groove 44c and return to the inner container 11 through the through-hole 42. Thus, when the upper cap 16 is closed to lid the dispensing container, it is possible to prevent the inner side of the upper cap 16 and the surface of the discharge cap 15 from becoming dirty due to overflow of the content M.

Although this example specifically describes the configuration in which the circulation allowable groove 44c is provided only to the valve element 44, an additional circulation allowable groove may be provided to the valve seat 22a although not particularly illustrated.

The following describes effects of the dispensing container 10 configured as described above.

To discharge the content M from the dispensing container 10, first, the upper cap 16 is removed from the discharge cap 15. Thereafter, while the dispensing container 10 is tilted to a discharge posture in which the discharge port 14 points downward (refer to Figure 5), the dispensing container 10 is pushed inward in the radial direction for squeezed deformation (elastic deformation) to achieve volume reduction of the inner container 11 through deformation together with the outer container 12.

Accordingly, the pressure in the inner container 11 rises and the content M in the inner container 11 pushes the valve element 44 through the through-hole 42 to elastically deform the elastic coupling pieces 45 so that the valve element 44 is elastically displaced toward the outside of the inner container 11 in the direction of the container axis O, thereby opening the communication hole 43. Accordingly, the content M in the inner container 11 is externally discharged through the through-hole 42, the communication hole 43, the inside of the externally fitting tubular part 40, and the discharge port 14 (refer to Figure 5).

Thereafter, when the pushing force on the valve element 44 by the content M in the inner container 11 is reduced by stopping or canceling the pushing of the dispensing container 10, the valve element 44 is restored and displaced toward the inner side of the inner container 11 in the direction of the container axis O by the elastic restoring force of the elastic coupling pieces 45.

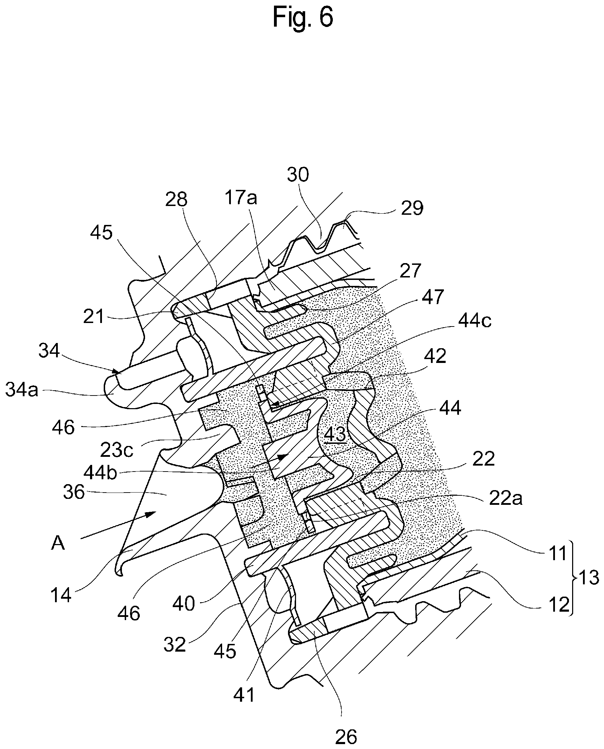

In this state, when the valve element 44 enters the communication hole 43 as illustrated in Figure 6, the outer peripheral surface of the valve element 44 slidably contacts the inner peripheral surface of the communication hole 43 so that the communication hole 43 is closed. Accordingly, the inner space 46 in which the content M not returned to the inner container 11 remains is formed between the body tubular member 23 and the inside plug member 21. The inner space 46 is communicated with the discharge port 14, and its communication with the communication hole 43 is cut off by the valve element 44 functioning as part of a partition wall.

Then, after the inner space 46 is formed in this manner, the inner volume of the inner space 46 increases along with the restoring displacement of the valve element 44 as the valve element 44 is continuously restored and displaced and slides in the communication hole 43 in the direction of the container axis O. Accordingly, the content M in the discharge port 14 can be sucked into the inner space 46, and air A can be sucked from the outside into the discharge port 14.

Then, when the pushing of the container body 13 is canceled while the communication hole 43 is closed by the valve element 44, the outer container 12 is deformed and restored with the inner container 11 deformed by volume reduction. In this case, negative pressure occurs between the inner container 11 and the outer container 12 and acts on the air valve part 41 through the intake hole 19, thereby opening the air valve part 41. Accordingly, external air is taken into the space between the outer container 12 and the inner container 11 through the external air introduction hole 34, the external air communication hole 28, the communication groove 20, and the intake hole 19. Then, when the internal pressure of the space between the outer container 12 and the inner container 11 increases to atmospheric pressure, the air valve part 41 is deformed and restored to cut off the intake hole 19 from the outside. Accordingly, the shape of the inner container 11 with reduced volume is maintained after the content M is discharged.

Any remaining content M in the inner space 46 when the valve element 44 sits on the valve seat 22a to achieve closing can return into the inner container 11 through the circulation allowable groove 44c and the gap between the outer peripheral surface of the valve element 44 and the inner peripheral surface of the communication tubular part 22. In addition, the content M closes the circulation allowable groove 44c by surface tension at the final stage, thereby preventing air circulation.

In this state, when the outer container 12 of the container body 13 is deformed by squeezing again, the internal pressure of the space between the outer container 12 and the inner container 11 becomes positive since the air valve part 41 is cut off, and this positive pressure deforms the inner container 11 through volume reduction so that the content M is discharged by the above effect.

When the pushing of the dispensing container 10 is stopped and canceled before the communication hole 43 is closed by the valve element 44 after the content M is discharged, the inner container 11 becomes deformed and restored, following the outer container 12. Accordingly, the pressure in the inner container 11 decreases and negative pressure occurs, and thus the valve element 44 is smoothly displaced and restored toward the inner side of the inner container 11 in the direction of the container axis O as the negative pressure acts on the valve element 44.

As described so far, the dispensing container 10 according to the present embodiment can be reused (recycled) after use since the inner container 11 and the outer container 12 are both made of a polyethylene terephthalate resin. In addition, the dispensing container 10 according to the present embodiment has an excellent aroma retaining property (capability of holding aroma of the contents) as compared to the conventional dispensing container made of PP or the like.

According to the dispensing container 10 according to the present embodiment, after the content M is discharged, the content M in the discharge port 14 can be sucked into the inner space 46 and air A can be sucked from the outside into the discharge port 14, and thus the content M not returned to the inner container 11 can be prevented from remaining in the discharge port 14. Accordingly, it is possible to prevent leakage of the content M from the discharge port 14 after the content M is discharged.

Since the through-hole 42 has a diameter smaller than that of the communication hole 43, the valve element 44 contacts the part of the plug body 47, which is positioned on the inner side of the communication tubular part 22 in the radial direction, when the valve element 44 is unintentionally displaced toward the inner side of the inner container 11 in the above axis line direction, and thus the displacement of the valve element 44 can be regulated.

Since the upper cap 16 is provided with the inner seal tubular part 37, the content M can be prevented from unexpectedly leaking from the discharge port 14 while the upper cap 16 is closed.

Since the content M not returned to the inner container 11 is unlikely to remain in the discharge port 14 after the content M is discharged as described above, it is possible to prevent, when the upper cap 16 is mounted on the discharge cap 15 and the inner seal tubular part 37 is fitted in the discharge port 14 after the content M is discharged, the content M from being pushed out through the discharge port 14 by the inner seal tubular part 37 and prevent the content M from adhering to the inner seal tubular part 37.

The technical scope of the present invention is not limited to the above embodiment but may be changed in various kinds of manners without departing from the gist of the present invention.

For example, although the above embodiment describes the dispensing container 10 including the air valve part, the present invention is also applicable to a dispensing container including no air valve part. Specifically, for example, in a dispensing container having a double structure and including no air valve part but an extremely narrow external air introduction hole, part or all of the inner container 11 and the outer container 12 of the container body 13 may be made of a polyethylene terephthalate resin.

Although not particularly described in the above embodiment, the dispensing container 10 as described above is applicable when the content M is various kinds of liquid such as liquid food. Specific examples of liquid food include soy sauce containing seasonings such as soy sauce and a soy sauce product, and any other seasonings.

### Method for suppressing decrease of aroma components

A method for suppressing a decrease in the above aroma components contained in a liquid seasoning over time according to the present invention includes a step of filling, with the liquid seasoning, a container made of a polyethylene terephthalate resin and having at least a double-layered structure. The double-layered container used in the suppression method may be that described above.

### Examples

The following specifically describes the present invention by Examples.

### Configuration of double-layered container and details of measurement conditions

The container body 13 made of a polyethylene terephthalate resin was experimentally produced, and the actual thicknesses of the inner container 11 and the outer container 12 thereof were measured. The measurement was performed based on an instrument, a measurement method, and other conditions described below.
Instrument: OLYMPUS Magna-Mike 8600
Measurement metal ball: 1/16 IN
Measurement method: although not particularly illustrated in detail, the shoulder part is provided with four ribs (protrusions) in the longitudinal direction, and the thicknesses of the inner container 11 and the outer container 12 were measured at four places on lines along which the ribs extend and at heights separated from each other by 30 mm from the bottom part 13f of the container body 13. The thicknesses of the inner container 11 and the outer container 12 obtained through the measurement were as described below. The thicknesses are in the unit of [mm], and <1> to <4> denote the four places on the lines along which the shoulder part ribs extend. The joining line ("parting line") of a mold is positioned on two of the four ribs, and the remaining ribs are separated from the parting line by 90°. Typically, the thickness of the container is measured with respect to the parting line.

### [Thickness of inner container]

At the distance of 150 mm from the bottom part: <1> 0.057, <2> 0.075, <3> 0.078, <4> 0.08

At the distance of 120 mm from the bottom part: <1> 0.074, <2> 0.087, <3> 0.099, <4> 0.077

At the distance of 90 mm from the bottom part: <1> 0.067, <2> 0.096, <3> 0.116, <4> 0.073

At the distance of 60 mm from the bottom part: <1> 0.066, <2> 0.09, <3> 0.115, <4> 0.057

At the distance of 30 mm from the bottom part: <1> 0.081, <2> 0.099, <3> 0.123, <4> 0.079

The average value and the standard deviation of the thickness of the inner container over the positions were as follows.

At the distance of 150 mm from the bottom part: Average value 0.073, Standard deviation 0.010536

At the distance of 120 mm from the bottom part: Average value 0.084, Standard deviation 0.011295

At the distance of 90 mm from the bottom part: Average value 0.088, Standard deviation 0.022465

At the distance of 60 mm from the bottom part: Average value 0.082, Standard deviation 0.026038

At the distance of 30 mm from the bottom part: Average value 0.096, Standard deviation 0.020421

### [Thickness of outer container]

At the distance of 150 mm from the bottom part: <1> 0.253, <2> 0.246, <3> 0.255, <4> 0.263

At the distance of 120 mm from the bottom part: <1> 0.276, <2> 0.256, <3> 0.286, <4> 0.252

At the distance of 90 mm from the bottom part: <1> 0.278, <2> 0.261, <3> 0.297, <4> 0.265

At the distance of 60 mm from the bottom part: <1> 0.245, <2> 0.246, <3> 0.267, <4> 0.343

At the distance of 30 mm from the bottom part: <1> 0.275, <2> 0.27, <3> 0.266, <4> 0.31

The average value and the standard deviation of the thickness of the outer container over the positions were as follows.

At the distance of 150 mm from the bottom part: Average value 0.254, Standard deviation 0.006994

At the distance of 120 mm from the bottom part: Average value 0.268, Standard deviation 0.016197

At the distance of 90 mm from the bottom part: Average value 0.275, Standard deviation 0.016215

At the distance of 60 mm from the bottom part: Average value 0.275, Standard deviation 0.046292

At the distance of 30 mm from the bottom part: Average value 0.280, Standard deviation 0.020172

The thickness distributions of the inner container 11 and the outer container 12 obtained from the above measurement results were as described below.

### [Thickness distribution of inner container]

At the distance of 150 mm from the bottom part: Thickness 0.0725

At the distance of 120 mm from the bottom part: Thickness 0.08425

At the distance of 90 mm from the bottom part: Thickness 0.088

At the distance of 60 mm from the bottom part: Thickness 0.082

At the distance of 30 mm from the bottom part: Thickness 0.0955

### [Thickness distribution of outer container]

At the distance of 150 mm from the bottom part: Thickness 0.25425

At the distance of 120 mm from the bottom part: Thickness 0.2675

At the distance of 90 mm from the bottom part: Thickness 0.27525

At the distance of 60 mm from the bottom part: Thickness 0.27525

At the distance of 30 mm from the bottom part: Thickness 0.280255

The inner container of the double-layered container described above was made of a material into which about 2% of an oxygen absorber of a polyamide/transition metal catalyst prepared according to Japanese Patent No. 5161462 (described above) was kneaded and used below.

The amounts of ethyl esters in Examples and the amount of cyclohexanol as an internal standard compound were measured in accordance with conditions below by headspace SPME-GC-MS.

### - Method for separation and concentration of aroma components

Separation and concentration of aroma components were performed by using an SPME fiber and a volatile component extraction device by a solid phase micro extraction method in accordance with conditions below.

### <Solid phase micro extraction conditions>

SPME fiber: SPME Fiber Assembly 75 µm CAR/PDMS (manufactured by SUPELCO)
Volatile component extraction device: AOC-5000 (manufactured by Shimadzu Corporation)
Preliminary heating: 40°C, 5 min
Agitation speed: 250 rpm
Volatile component extraction: 40°C, 20 min
Desorption time: 20 min

### - Measurement method and measurement conditions for ethyl esters

Gas chromatography mass spectrometry was employed to measure the peak area of each ethyl ester and the peak area of the internal standard compound in a liquid seasoning in accordance with conditions below. The liquid seasonings were fired soy sauce (Example 1), pure soy sauce (Example 2), and Ponzu vinegar (Example 4).

### <Gas chromatography conditions>

Measurement instrument: QP-2010 ultra (manufactured by Shimadzu Corporation)
Column: DB WAX-UI (length 60m, diameter 0.25 mm, thickness 0.25 µm) (manufactured by Agilent Technologies, Inc.)
Temperature condition: Held at 40°C (3 min) -> Raised at 5°C/min to 110°C -> Raised at 10°C/min to 240°C -> Held for 5 min
Carrier: High-purity helium, constant linear speed mode 40 cm/min
Scanned mass range: m/z 40.0 to 250.0
Ionization scheme: EI

The peak area values of ethyl esters and cyclohexanol as the internal standard compound were determined by using the following m/z values.
Ethyl propanoate m/z 102
2-Methylethyl propanoate m/z 71
Ethyl butyrate m/z 71
2-Methylethyl butyrate m/z 102
3-Methylethyl butyrate m/z 88
Cyclohexanol m/z 82

The amounts of ethyl esters in Examples and 2-octanol as the internal standard compound were measured in accordance with conditions below through analysis of sample extract with ethyl acetate by GC-MS.

### - Sample extraction method

5.0 g of a food and beverage composition (kelp soy sauce (Example 3)) as a sample described below was mixed with 2.0 g of salt, 1.0 ml of ethyl acetate, and 100 µL of 2-octanol solution (100 ppm), the mixture was vigorously agitated for 5 minutes, and then an organic solvent layer was extracted. This operation was repeated 3 times, and organic solvent liquid thus obtained was dried with anhydrous sodium sulfate and condensed to 500 µL to acquire aroma concentrate. The aroma concentrate thus obtained was subjected to gas chromatography mass spectrometry with conditions below.

### <Gas chromatography conditions>

Measurement instrument: 5977B (manufactured by Agilent Technologies, Inc.)
Column: DB WAX-UI (length 60m, diameter 0.25 mm, thickness 0.25 µm) (manufactured by Agilent Technologies, Inc.)
Temperature condition: Held at 40°C (3 min) -> Raised at 6°C/min to 250°C -> Held for 15 min
Carrier: High-purity helium, constant pressure mode 229 kPa
Scanned mass range: m/z 30.0 to 250.0
Ionization scheme: EI

The peak area values of each ethyl ester and 2-octanol as the internal standard compound were determined by using the following m/z values.
Ethyl tetradecanoate m/z 88
Ethyl hexadecanoate m/z 88
Ethyl octadecanoate m/z 88
Ethyl oleate m/z 55
Ethyl linoleate m/z 95
Ethyl 6,9,12-hexadecatrienoate m/z 75
Ethyl 9,12,15-hexadecatrienoate) m/z 75
Ethyl 6,9,12,15-octadecatetraenoate m/z 75
2-octanol m/z 55

Sensory evaluation of various kinds of food and beverage compositions was performed by two experienced and skilled panels with the liquid before storage as a control. Change in aroma and taste was evaluated according to the following criteria.
2: Aroma has extremely improved
1: Aroma has slightly improved
0: No change
-1: Aroma has slightly degraded
-2: Aroma has extremely degraded

### Example 1: Changes in ethyl esters in fired soy sauce and sensory evaluation

The above double-layered container body was filled with fired soy sauce (manufactured by Kikkoman Corporation), and the discharge cap was mounted on the container body filled with the fired soy sauce. The container body was stored at room temperature for 30 days. After the storage, the concentration of each ethyl ester contained in the fired soy sauce was measured. The ethyl ester concentration was determined as described above. The ethyl ester concentration at the start of the storage is taken to be 100%.
Test target 1: Double-layered container made of a polyethylene terephthalate resin (PET resin) (containing an oxygen absorber)
Test target 2: Double-layered container made of an ethylene-vinyl alcohol copolymer resin film (containing no oxygen absorber)

**[Table 1]**

| | Ethyl propanoate | 2-Methylethyl propanoate | Ethyl butyrate | 2-Methylethyl butyrate | 3-Methylethyl butyrate | Aroma sensory evaluation average | Taste sensory evaluation average |
|---|---|---|---|---|---|---|---|
| Test target 1 | 100% | 86% | 83% | 86% | 82% | 0 | 0 |
| Test target 2 | 95% | 59% | 63% | 41% | 34% | -1 | -1 |

As indicated in Table 1, in the double-layered container made of an ethylene-vinyl alcohol copolymer resin film, particular ethyl esters remarkably decreased, but in the double-layered container made of a polyethylene terephthalate resin, the decrease in ethyl esters was small. In addition, for the double-layered container made of a polyethylene terephthalate resin, a high sensory evaluation for aroma and taste was obtained as compared to the double-layered container made of an ethylene-vinyl alcohol copolymer resin. These results indicate that the double-layered container made of a polyethylene terephthalate resin has an excellent aroma retaining property for fired soy sauce.

### Example 2: Changes in ethyl esters in pure soy sauce and sensory evaluation

The container body was filled with pure soy sauce (manufactured by Kikkoman Corporation), and the discharge cap was mounted on the container body filled with the pure soy sauce. The container body was stored at room temperature for 30 days. After the storage, the concentration of each ethyl ester contained in the pure soy sauce was measured. The ethyl ester concentration was determined as described above. The ethyl ester concentration at the start of the storage is taken to be 100%.
Test target 1: Double-layered container made of a polyethylene terephthalate resin (PET resin) (containing an oxygen absorber)
Test target 2: Double-layered container made of an ethylene-vinyl alcohol copolymer resin film (containing no oxygen absorber)

**[Table 2]**

| | Ethyl propanoate | 2-Methylethyl propanoate | Ethyl butyrate | 2-Methylethyl butyrate | 3-Methylethyl butyrate | Aroma sensory evaluation average | Taste sensory evaluation average |
|---|---|---|---|---|---|---|---|
| Test target 1 | 88% | 92% | 92% | 104% | 102% | 0 | 0 |
| Test target 2 | 90% | 95% | 60% | 67% | 33% | -1 | -1 |

As indicated in Table 2, in the double-layered container made of an ethylene-vinyl alcohol copolymer resin film, ethyl esters remarkably decreased, but in the double-layered container made of a polyethylene terephthalate resin, the decrease in ethyl esters was small. In addition, for the double-layered container made of a polyethylene terephthalate resin, a high sensory evaluation for aroma and taste was obtained as compared to the double-layered container made of an ethylene-vinyl alcohol copolymer resin. These results indicate that the double-layered container made of a polyethylene terephthalate resin has an excellent aroma retaining property for pure soy sauce.

### Example 3: Changes in ethyl esters in kelp soy sauce and sensory evaluation

The container body was filled with kelp soy sauce (manufactured by Kikkoman Corporation), and the discharge cap was mounted on the container body filled with the kelp soy sauce. The container body was stored at room temperature for 30 days. After the storage, the concentration of each ethyl ester contained in the kelp soy sauce was measured. The ethyl ester concentration was determined as described above. The ethyl ester concentration at the start of the storage is taken to be 100%.
Test target 1: Double-layered container made of a polyethylene terephthalate resin (PET resin) (containing an oxygen absorber)
Test target 2: Double-layered container made of an ethylene-vinyl alcohol copolymer resin film (containing no oxygen absorber)

**[Table 3]**

| | Ethyl tetradecanoate | Ethyl hexadecanoate | Ethyl octadecanoate | Ethyl oleate | Ethyl linoleate |
|---|---|---|---|---|---|
| Test target 1 | 110% | 108% | 103% | 109% | 105% |
| Test target 2 | 25% | 44% | 58% | 53% | 50% |

**[Table 4]**

| | Ethyl 6,9,12-hexadecanoate | Ethyl 9,12,15-hexadecanoate | Ethyl 6,9,12,15-octadecatetraenoate | Aroma sensory evaluation average | Taste sensory evaluation average |
|---|---|---|---|---|---|
| Test target 1 | 106% | 120% | 122% | 0 | 0 |
| Test target 2 | 35% | 32% | 18% | -2 | -2 |

As indicated in Tables 3 and 4, in the double-layered container made of an ethylene-vinyl alcohol copolymer resin film, the ethyl esters decreased remarkably, but in the double-layered container made of a polyethylene terephthalate resin, the decrease in the ethyl esters was small. In addition, the double-layered container made of a polyethylene terephthalate resin obtained a high sensory evaluation for aroma and taste as compared to the double-layered container made of ethylene-vinyl alcohol copolymer resin. These results indicate that the double-layered container made of a polyethylene terephthalate resin has an excellent aroma retaining property for kelp soy sauce and can maintain the quality thereof.

### Example 4: Change in ethyl esters in Ponzu vinegar and sensory evaluation

The container body was filled with Ponzu vinegar (manufactured by Yamasa Corporation), and the discharge cap was mounted on the container body filled with the Ponzu vinegar. The container body was stored at room temperature for 30 days. After the storage, the concentration of each ethyl ester contained in the Ponzu vinegar was measured. The ethyl ester concentration was determined as described above. The ethyl ester concentration at the start of the storage is taken to be 100%.
Test target 1: Double-layered container made of a polyethylene terephthalate resin (PET resin) (containing an oxygen absorber)
Test target 2: Double-layered container made of an ethylene-vinyl alcohol copolymer resin film (containing no oxygen absorber)

**[Table 5]**

| | Ethyl propanoate | 2-Methylethyl propanoate | Ethyl butyrate | 2-Methylethyl butyrate | 3-Methylethyl butyrate | Aroma sensory evaluation average | Taste sensory evaluation average |
|---|---|---|---|---|---|---|---|
| Test target 1 | 100% | 83% | 84% | 95% | Not detected | 0 | 0 |
| Test target 2 | 104% | 57% | 55% | 57% | Not detected | -0.5 | -1.5 |

As indicated in Table 5, in the double-layered container made of an ethylene-vinyl alcohol copolymer resin film, the ethyl esters remarkably decreased, but in the double-layered container made of a polyethylene terephthalate resin, the decrease in the ethyl esters was small. In addition, for the double-layered container made of a polyethylene terephthalate resin, a high sensory evaluation for aroma and taste was obtained as compared to the double-layered container made of an ethylene-vinyl alcohol copolymer resin. These results indicate that the double-layered container made of a polyethylene terephthalate resin has an excellent aroma retaining property for Ponzu vinegar and can maintain the quality thereof.

### Example 5: Change in chromaticity in pure soy sauce

The container body was filled with pure soy sauce (manufactured by Kikkoman Corporation), and the discharge cap was mounted on the container body filled with the pure soy sauce. The container body was stored at room temperature for 30 days. The color number of the pure soy sauce before and after the storage was measured. Test target 1: Double-layered container made of a polyethylene terephthalate resin (PET resin) (containing an oxygen absorber)
Test target 2: Double-layered container made of an ethylene-vinyl alcohol copolymer resin film (containing no oxygen absorber)
Test target 3: Single layered bottle made of a polyethylene terephthalate resin (containing no oxygen absorber)

**[Table 6]**

| | Before storage | After storage |
|---|---|---|
| Test target 1 | 18 | 16 |
| Test target 2 | 18 | 16 |
| Test target 3 | 18 | 6 |

As indicated in Table 6, in the double-layered container made of a polyethylene terephthalate resin and the double-layered container made of an ethylene-vinyl alcohol copolymer resin film, the color change was small as compared to the single layered container made of a polyethylene terephthalate resin, which indicates that the quality of the contents was maintained. It is clear that the color can be significantly maintained when such a double-layered container is used.

The amounts of terpenes in Examples and 2-octanone as the internal standard compound were measured in accordance with conditions below by headspace SPME-GC-MS.

### - Method for separation and concentration of aroma components

Separation and concentration of aroma components was performed by using an SPME fiber and a volatile component extraction device by a solid phase micro extraction method in accordance with conditions below.

### <Solid phase micro extraction conditions>

SPME fiber: SPME Fiber Assembly 75 µm CAR/PDMS (manufactured by SUPELCO)
Volatile component extraction device: AOC-5000 (manufactured by Shimadzu Corporation)
Preliminary heating: 40°C, 5 min
Agitation speed: 250 rpm
Volatile component extraction: 40°C, 20 min
Desorption time: 20 min

### - Measurement method and measurement condition for terpenes

Gas chromatography mass spectrometry was employed to measure the peak area of each ethyl ester and the peak area of the internal standard compound in a liquid seasoning and a drink in accordance with conditions below.

### <Gas chromatography conditions>

Measurement instrument: QP-2010 ultra (manufactured by Shimadzu Corporation)
Column: DB WAX-UI (length 60m, diameter 0.25 mm, thickness 0.25 µm) (manufactured by Agilent Technologies, Inc.)
Temperature condition: Held at 40°C (3 min) -> Raised at 5°C/min to 110°C -> Raised at 10°C/min to 240°C -> Held for 5 min
Carrier: High-purity helium, constant linear speed mode 40 cm/min
Scanned mass range: m/z 40.0 to 250.0
Ionization scheme: EI

The peak area values of terpenes and 2-octanone as the internal standard compound were determined by using the following m/z values. Also, as a confirmation ion of each terpene, in the brackets
Sabinene m/z 93
Pinene m/z 93
Limonene m/z 93
Terpinene m/z 93
Cymene m/z 119
Linalool m/z 93
2-octanone m/z 58

### Example 6: Change in terpenes in Ponzu vinegar

The container body was filled with Ponzu vinegar (manufactured by Mizkan Holdings Co., Ltd.), and the discharge cap was mounted on the container body filled with the Ponzu vinegar. The container body was stored at room temperature for 30 days. After the storage, the amount of each terpene contained in the Ponzu vinegar was measured. The terpene concentration was determined as described above. The terpene concentration at the start of the storage is taken to be 100%.
Test target 1: Double-layered container made of a polyethylene terephthalate resin (PET resin) (containing an oxygen absorber)
Test target 2: Double-layered container made of an ethylene-vinyl alcohol copolymer resin film (containing no oxygen absorber)

**[Table 7]**

| | Sabinene | Pinene | Limonene | Terpinene | Cymene | Linalool |
|---|---|---|---|---|---|---|
| Test target 1 | 123% | 95% | 91% | 102% | 94% | 97% |
| Test target 2 | 45% | 39% | 38% | 40% | 53% | 51% |

As indicated in Table 7, in the double-layered container made of an ethylene-vinyl alcohol copolymer resin film the terpenes remarkably decreased, but in the double-layered container made of a polyethylene terephthalate resin, the decrease in the terpenes was small. In addition, for the double-layered container made of a polyethylene terephthalate resin, a high sensory evaluation for aroma and taste was obtained as compared to the double-layered container made of ethylene-vinyl alcohol copolymer resin. These results indicate that the double-layered container made of a polyethylene terephthalate resin has an excellent aroma retaining property for Ponzu vinegar.

### Example 7: Change in terpenes in vegetable-fruit mixed juice drink

The container body was filled with a vegetable-fruit mixed juice drink (vegetable juice 65%; manufactured by Ito En Ltd.), and the discharge cap was mounted on the container body filled with the pure soy sauce. The container body was stored at room temperature for 30 days. After the storage, the concentration of each terpene contained in the vegetable-fruit mixed juice drink was measured. The terpene concentration was determined as described above. The terpene concentration at the start of the storage is taken to be 100%.
Test target 1: Double-layered container made of a polyethylene terephthalate resin (PET resin) (containing an oxygen absorber)
Test target 2: Double-layered container made of an ethylene-vinyl alcohol copolymer resin film (containing no oxygen absorber)

**[Table 8]**

| | Sabinene | Pinene | Limonene | Terpinene | Cymene | Linalool |
|---|---|---|---|---|---|---|
| Test target 1 | 110% | 100% | 111% | 101% | 98% | Not detected |
| Test target 2 | 36% | 39% | 67% | 27% | 40% | Not detected |

As indicated in Table 8, in the double-layered container made of an ethylene-vinyl alcohol copolymer resin film the terpenes remarkably decreased, but in the double-layered container made of a polyethylene terephthalate resin, the decrease in the terpenes was small. In addition, for the double-layered container made of a polyethylene terephthalate resin, a high sensory evaluation for aroma and taste was obtained as compared to the double-layered container made of an ethylene-vinyl alcohol copolymer resin. These results indicate that the double-layered container made of a polyethylene terephthalate resin has an excellent aroma retaining property for a vegetable-fruit mixed juice drink.

### Example 8: Change in terpenes in soft drink

The container body was filled with a soft drink (AQUARIUS VITAMIN (manufactured by Coca-Cola Customer Marketing Company, Limited)), and the discharge cap was mounted on the container body filled with the soft drink. The container body was stored at room temperature for 30 days. After the storage, the concentration of each terpene contained in the soft drink was measured. The terpene concentration was determined as described above. The terpene concentration at the start of the storage is taken to be 100%.
Test target 1: Double-layered container made of a polyethylene terephthalate resin (PET resin) (containing an oxygen absorber)
Test target 2: Double-layered container made of an ethylene-vinyl alcohol copolymer resin film (containing no oxygen absorber)

**[Table 9]**

| | Sabinene | Pinene | Limonene | Terpinene | Cymene | Linalool |
|---|---|---|---|---|---|---|
| Test target 1 | Not detected | 98% | 95% | 96% | 100% | 88% |
| Test target 2 | Not detected | 30% | 41% | 45% | 42% | 48% |

As indicated in Table 9, in the double-layered container made of an ethylene-vinyl alcohol copolymer resin film, the terpenes remarkably decreased, but in the double-layered container made of a polyethylene terephthalate resin, the decrease in the terpenes was small. In addition, for the double-layered container made of a polyethylene terephthalate resin, a high sensory evaluation for aroma and taste was obtained as compared to the double-layered container made of an ethylene-vinyl alcohol copolymer resin. These results indicate that the double-layered container made of a polyethylene terephthalate resin has an excellent aroma retaining property for a soft drink and can maintain the quality thereof.

### Example 9: Change in terpenes in dressing

The container body was filled with a dressing type seasoning (green perilla dressing (manufactured by RIKEN VITAMIN Co., Ltd.)), and the discharge cap was mounted on the container body filled with the dressing type seasoning. The container body was stored at room temperature for 30 days. After the storage, the concentration of each terpene contained in the dressing type seasoning was measured. The terpene concentration was determined as described above. The terpene concentration at the start of the storage is taken to be 100%.
Test target 1: Double-layered container made of a polyethylene terephthalate resin (PET resin) (containing an oxygen absorber)
Test target 2: Double-layered container made of an ethylene-vinyl alcohol copolymer resin film (containing no oxygen absorber)

**[Table 10]**

| | Sabinene | Pinene | Limonene | Terpinene | Cymene | Linalool |
|---|---|---|---|---|---|---|
| Test target 1 | Not detected | 105% | 111% | 98% | 107% | 111% |
| Test target 2 | Not detected | 30% | 41% | 45% | 42% | 59% |

As indicated in Table 10, in the double-layered container made of an ethylene-vinyl alcohol copolymer resin film, had a significant decrease of the terpenes remarkably decreased, but in the double-layered container made of a polyethylene terephthalate resin containing an oxygen absorber, the decrease in the terpenes was small. For the double-layered container made of a polyethylene terephthalate resin containing an oxygen absorber, a high sensory evaluation for aroma and taste was obtained as compared to the double-layered container made of an ethylene-vinyl alcohol copolymer resin. These results indicate that the double-layered container made of a polyethylene terephthalate resin containing an oxygen absorber has an excellent aroma retaining property for a dressing type seasoning and can maintain the quality thereof.

### Industrial Applicability

The present invention can provide a food and beverage composition, a liquid seasoning in particular, contained in a container capable of maintaining an aroma retaining property for a long period of time with a small change in aroma components after opened.

### Reference Signs List

10 ... dispensing container, 11 ... inner container, 12 ... outer container, 13 ... container body, 13a ... mouth portion, 14 ... discharge port, 15 ... discharge cap, 19 ... intake hole, 34 ... external air introduction hole, M ... content

## Claims

1. A food and beverage composition contained in a container having at least a double-layered structure and including an innermost layer made of a polyethylene terephthalate resin.

2. The food and beverage composition according to claim 1, wherein the container is a dispensing container including:
a double-layered container body including
an inner container that contains the food and beverage composition and deflates as the amount of the food and beverage composition decreases, and
an outer container encompassing the inner container and having an intake hole through which external air is taken into a space between the inner container and the outer container; and
a discharge cap mounted on a mouth portion of the container body and having a discharge port through which the food and beverage composition is discharged.

3. The food and beverage composition according to claim 1 or 2, wherein at least one of the containers contains an oxygen absorber.

4. The food and beverage composition according to claim 3, wherein a concentration of ethyl esters having 6 to 20 carbon atoms and/or terpenes having 10 carbon atoms contained in the food and beverage composition stored at room temperature for 30 days after manufacturing is 80% or higher of the concentration on day 0 after manufacturing.

5. The food and beverage composition according to any one of claims 1 to 4, which is a liquid seasoning.

6. The food and beverage composition according to claim 5, wherein the liquid seasoning is soy sauce or a soy sauce product.

7. A method for suppressing a decrease in aroma components contained in a food and beverage composition over time, the method comprising a step of filling, with the food and beverage composition, a container made of a polyethylene terephthalate resin and having at least a double-layered structure.

8. The method according to claim 7, wherein the aroma components are ethyl esters having 6 to 20 carbon atoms and/or terpenes having 10 carbon atoms.
